(19) Europäisches Patentamt / European Patent Office / Office européen des brevets

(11) **EP 2 284 569 B1**

(12) **EUROPEAN PATENT SPECIFICATION**

(45) Date of publication and mention
of the grant of the patent:
**01.05.2013 Bulletin 2013/18**

(51) Int Cl.:
***G01S 13/90*** $^{(2006.01)}$

(21) Application number: **10007300.6**

(22) Date of filing: **15.07.2010**

(54) **Automatic focussing of SAR raw data based on the estimation of the phase error function**

Automatische Fokussierung von SAR-Rohdaten auf Basis der Einschätzung der Phasenfehlerfunktion

Focalisation automatique des données brutes SAR basée sur l'évaluation de la fonction d'erreur de phase

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.07.2009 US 225930 P**

(43) Date of publication of application:
**16.02.2011 Bulletin 2011/07**

(73) Proprietor: **EADS Deutschland GmbH
85521 Ottobrunn (DE)**

(72) Inventors:
• **Musmann, Hans-Georg, Prof., Dr.
38259 Bad Salzgitter (DE)**
• **Farhoud, Ridha, Dr.
30453 Hannover (DE)**

(74) Representative: **Riegel, Werner
Patentabteilung, LAIP1
88039 Friedrichshafen (DE)**

(56) References cited:
**US-A- 4 924 229**

• **QINYAN TAN ET AL: "An Auto-Focus Algorithm for Missile-Borne SAR" MICROWAVE CONFERENCE, 2008 CHINA-JAPAN JOINT, IEEE, PISCATAWAY, NJ, USA, 10 September 2008 (2008-09-10), pages 253-257, XP031417265 ISBN: 978-1-4244-3821-1**

• **ZHANG XIN ET AL: "An integrated real time PGA method for strip map airborne SAR" ELECTRONIC PROCEEDINGS / EUSAR 2006, 6TH EUROPEAN CONFERENCE ON SYNTHETIC APERTURE RADAR : 16 - 18 MAY 2006, DRESDEN, GERMANY / ITG/VDE,, 16 May 2006 (2006-05-16), page 3PP, XP009140067 ISBN: 978-3-8007-2960-9**

• **WAHL D E ET AL: "PHASE GRADIENT AUTOFOCUS - A ROBUST TOOL FOR HIGH RESOLUTION SAR PHASE CORRECTION" IEEE TRANSACTIONS ON AEROSPACE AND ELECTRONIC SYSTEMS, IEEE SERVICE CENTER, PISCATAWAY, NJ, US LNKD- DOI: 10.1109/7.303752, vol. 30, no. 3, 1 July 1994 (1994-07-01), pages 827-834, XP000459413 ISSN: 0018-9251**

• **CALLOW H J ET AL: "Stripmap phase gradient autofocus" OCEANS 2003. MTS/IEEE PROCEEDINGS. CELEBRATING THE PAST, TEAMING TOWARD THE FUTURE. SAN DIEGO, CA, SEPT. 22 - 26, 2003; [OCEANS MTS/IEEE CONFERENCE PROCEEDINGS], COLUMBIA, MD : MARINE TECHN. SOC, US LNKD- DOI: 10.1109/OCEANS.2003.178291, vol. 5, 22 September 2003 (2003-09-22), pages 2414-2421, XP010694868 ISBN: 978-0-933957-30-5**

• **HIAN LIM CHAN ET AL: "Noniterative Quality Phase-Gradient Autofocus (QPGA) Algorithm for Spotlight SAR Imagery" IEEE TRANSACTIONS ON GEOSCIENCE AND REMOTE SENSING, IEEE SERVICE CENTER, PISCATAWAY, NJ, US, vol. 36, no. 5, 1 September 1998 (1998-09-01), XP011021081 ISSN: 0196-2892**

• KOO V C ET AL: "A Comparison of Autofocus Algorithms for SAR Imagery" PROGRESS IN ELECTROMAGNETICS RESEARCH SYMPOSIUM 2005, HANGZHOU, CHINA, AUGUST 22-26,, [Online] 1 January 2005 (2005-01-01), pages 16-19, XP007911437 Retrieved from the Internet: URL:http://piers.mit.edu/PIERSONLINE/downl oad.php?file=MDUwMTEwMTQyOTQ0fF ZvbDFObzFQYWdlMTZ0bzE5LnBkZg== ORD - 2005-00-00>

**Description**

The invention is related to a method relating to the features in claim 1.

For high resolution SAR images it is necessary to apply autofocussing techniques in addition to motion compensation to ensure the desired image resolution. Several autofocussing techniques have been proposed in the last years. The most advanced techniques are derived from the Phase-Gradient Algorithm (PGA) (see Hayes, M.P., Callow, H.J. and Gough, P.T. (2002) Strip-map phase gradient autofocus. Auckland, New Zealand: Proceedings Image and Vision Computing New Zealand 2002, IVCNZ2002, Nov 2002. 71-76), which estimates the phase error function from the raw data by evaluating the azimuth signals of reflectors. The phase error function is used for the correction of the raw data. The SAR image can then be generated using the nominal azimuth reference function. For a precise estimation of the phase error function point targets are required. Since such targets are not always available in the illuminated scene, the PGA algorithm uses so called strong reflectors instead, each of which consists of many joint point targets. Hence the phase error function estimated by PGA is not accurate. Furthermore positional errors of the used reflectors may cause an azimuth dependent coordinate error in the SAR image.

In order to improve the image Quality the Phase-Gradient Algorithm can be applied in an iterative manner (see Qinyan Tan et al: " An Auto -Focus Algorithm for Missile-Borne SAR", Microwave Conference 10 September 2008, pages 253-257, XP031417265, ISBN: 978-1-4244-3821-1). The iteration requires a huge amount of computation and makes it difficult to be used in real time processing. Using the Shift and Correlate Algorithm (SAC) and the Shift and Correlate of Gate Strategy algorithm (SACGS), that estimate the Doppler rate respectively before and after the Range Migration Compensation, the iterative operation of the used Phase-Gradient Algorithm can be reduced or even omitted, so a real time processing is possible. (see Xin Zhang et al: "An integrated real time PGA method for strip map airborne SAR", 6th European Conference on Synthetic Aperture Radar:16-18-May 2006, Dresden, Germany, page 3PP, XP009140067, ISBN: 978-3-8007-2960-9).

The object of the invention is to propose a method with which the faults of the Phase-Gradient Algorithm can be avoided.

This object is achieved by a method for autofocussing of SAR raw data using the range Doppler algorithm, wherein the method is embedded in a range Doppler processing of a side looking SAR in strip map mode, wherein the method comprises range compression, motion compensation and range migration correction in order to establish the signals of azimuth lines for estimating the azimuth signals of spatially distributed point targets wherein the azimuth signal of a point target is estimated from the azimuth signal of a reflector consisting of several neighbouring point targets, in order to calculate first the local phase error function of the point target and then the entire phase error function used to correct the phase of signals of the azimuth lines before azimuth compression.

The invention will now be described in more detail for the range-doppler algorithm but can also be used for the wavenumber domain algorithm or SAR spotlight modes with reference to the accompanying drawings.

Fig. 1   is a schematic view for generating a SAR image using the developed algorithm,

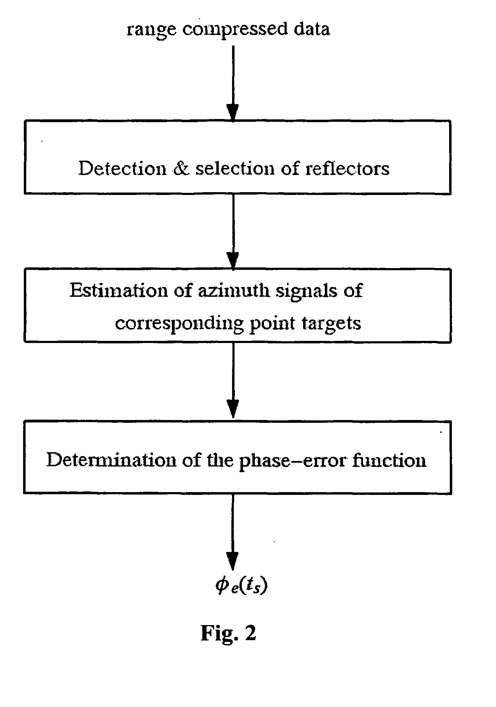

Fig. 2   is a schematic view of the block diagram of the developed algorithm for the estimation of the phase error Function.

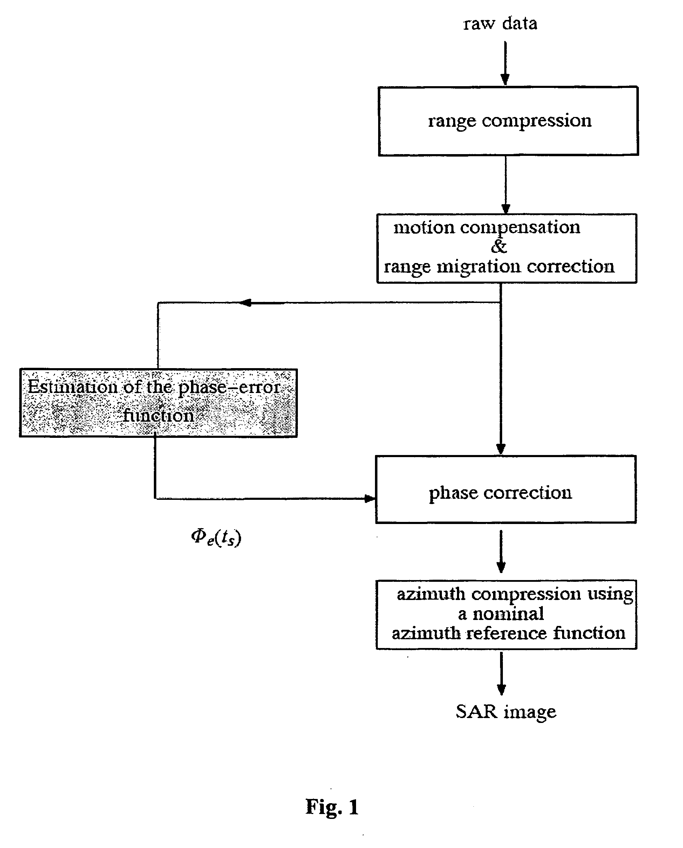

According to the invention a refined algorithm for automatic focussing of SAR raw data is developed, in order to avoid the faults of the Phase-Gradient Algorithm. The algorithm is embedded in a range Doppler processing of a side looking SAR in strip map mode and is also based on the evaluation of azimuth signals of reflectors in order to estimate the phase error function. Therefore it is assumed that range compression and motion compensation based on INS and GPS data are done in advance. Having obtained the phase error function, the raw data can be corrected and azimuth focussing using the nominal azimuth reference function as a matched filter can be realized (see Fig 1).

In a first step the algorithm estimates azimuth signals of point targets. Therefore, reflectors, which appear as highlights in their near environment, are detected, their coordinates are assigned and their azimuth signals are extracted. For the detection of candidates of reflectors a low resolution SAR image is generated using a nominal azimuth reference function with reduced bandwidth. The watershed algorithm (see Vincent, L. ; Soille, P.: Watersheds in Digital Spaces: An Efficient Algorithm Based on Immersion Simulations. In: IEEE Transactions on Pattern Analysis and Machine Intelligence 13 (1991). Nr. 6, S. 583-598) is applied on the azimuth lines of the SAR image in order to locate the candidates of reflectors. However, only a few azimuth lines are evaluated depending on their energy content, which must be higher than the mean of the energy content of the whole SAR image.

A ranking criterion $G_u$

$$G_u = \frac{|u|}{m_u},$$

(2.1)

is assigned to each candidate, that describes the quotient of the amplitude of the candidate within the SAR image |u| and the local mean value in its near environment $m_u$:

$$m_u = \frac{1}{T_{mi}} \int\limits_{T_0 - \frac{T_{mi}}{2}}^{T_0 + \frac{T_{mi}}{2}} |u(t_s)| \, dt_s,$$

(2.2)

where $T_{mi}$ is the time range for the determination of the mean value and To the position of the candidate. The SAR image strip is divided into several sections. The length of each section $T_A$ is limited to the half of the length of the synthetic aperture $T_L$. In each section of the SAR image one reflector at least is selected by consideration of the mentioned ranking criterion.

**Estimation of azimuth signals of point targets**

In order to extract the azimuth signal of a reflector a deramping processing followed by a Fourier transformation is applied on the range compressed data of the associated azimuth line. The reflector is extracted by use of a Hamming filter with the bandwidth *B*. The azimuth signal of the extracted reflector is finally obtained by carrying out the inverse deramping operation and inverse Fourier transformation. In order to obtain an azimuth signal of a point target, a mathematical model for the parametric description of the azimuth signal of a selected reflector is applied. In this model the reflector is described by azimuth signals of several equidistantly distributed point targets. The number of the point targets *M* is determined as

$$M = INT\left\{ -\frac{f_p \cdot B}{2\pi \cdot f_R} \right\} + 1,$$

(2.3)

where $f_R$ is the Doppler rate and $f_p$ the pulse repetition frequency. Thus, the azimuth signal $r(t_s)$ of the selected reflector can be described as

$$r(t_s) = \sum_{m=1}^{M} \left( A(t_s - T_m) \cdot \tau_p \cdot \sigma_m \cdot e^{j2\pi(-2R_{T_0}/\lambda + f_R(t_s - T_m)^2/2)} \cdot e^{j\phi_e(t_s)} \; ; \; |t_s - T_m| < \frac{T_L}{2} \right)$$

(2.4)

where $R_{T0}$ is the distance between antenna and reflector, $T_p$ the pulse duration, $\lambda$ the carrier wavelength, $A(t_s)$ the antenna pattern function and $\sigma_m$ the backscattering coefficient of the point target *m*. The distance between two neighbouring point targets is given by the pulse repetition frequency $f_p$. It is assumed that the *M* point targets are simultaneously illuminated by the antenna, their azimuth signals have the same phase error $\Phi_e(t_s)$ but different amplitude, i.e

$$A(t_{s}-T_{m1}) = A(t_{s}-T_{m2}) \quad ; \quad \forall \ m1, m2 \in \{1,..,M\} \tag{2.5}$$

An analysis of the statistics of reflectors shows that the backscattering function $\sigma(t_s)$ of a reflector is approximately symmetric and its power density spectrum consists mainly of real and positive frequency components. Hence an estimate of the backscattering function can be obtained by evaluating the power density spectrum $S_{\sigma\sigma}(\omega)$ of the azimuth signal $r(t_s)$

$$\hat{\sigma}(t_s) \approx FT^{-1}\left\{\sqrt{S_{\sigma\sigma}(\omega)}\right\} \tag{2.6}$$

An estimate of the backscattering function $\sigma(t_s)$ based on these assumption produces an estimation error according to an SNR of 15 dB.

From the backscattering function $\sigma(t_s)$, the backscattering coefficients $\sigma_m$ of the point targets $m$, with $m$ = 1, .., $M$, of the reflector can be determined

$$\sigma_m = \hat{\sigma}(T_m) \tag{2.7}$$

By deramping the signal $r(t_s)$ we obtain

$$d(t_s) = r(t_s) \cdot e^{-j\pi f_R t_s^2} \tag{2.8}$$

and with Eq.2.2

$$d(t_s) = \sum_{m=1}^{M}\left(A(t_s-T_m) \cdot \sigma_m \cdot \tau_p \cdot e^{j\frac{4\pi}{\lambda}R_{T_0}} \cdot e^{j\omega_m t_s} \cdot e^{j\pi f_R T_m^2} \cdot e^{j\phi_r(t_s)} \ f\ddot{u}r \ |t_s - T_m| < \frac{T_L}{2}, \right. \tag{2.9}$$

where

$$\omega_m = -2\pi f_R T_m.$$

In order to determine the deramped azimuth signal of a single point target Eq. 2.7 is redrafted. As result, the deramped signal $d(t_s)$ can be described as

$$d(t_s) = d_{m_p}(t_s) \cdot \left[1 + \sum_{m \neq m_p}\left(\frac{\hat{\sigma}(T_m)}{\hat{\sigma}(T_{m_p})} \cdot e^{j\pi f_R(T_m^2 - T_{m_p}^2)} \cdot e^{j(\omega_m - \omega_{m_p})\cdot t_s}\right)\right], \tag{2.10}$$

where

$$d_{m_p}(t_s) = A(t_s - T_{m_p}) \cdot \sigma_{m_p} \cdot \tau_p \cdot e^{j\frac{4\pi}{\lambda}R_{T_0}} \cdot e^{j\omega_{m_p} t_s} \cdot e^{j\pi f_R T_{m_p}^2} \cdot e^{j\phi_e(t_s)} \; f\ddot{u}r \; |t_s - T_m| < \frac{T_L}{2},$$

$$(2.11)$$

is the requested deramped azimuth signal of the point target $m_p$ with the backscattering coefficient $\sigma_{0,m_p} = \hat{\sigma}(T_{m_p})$. Eq. 2.8 is used only to determine the phase $\phi_{m_p}(t_s)$ of the signal $d_{m_p}(t_s)$:

$$\phi_{m_p}(t_s) = \phi(t_s) - \phi_q(t_s),$$

$$(2.12)$$

where $\phi(t_s)$ is the phase signal of the observed signal d(ts) and $\phi_q(t_s)$ the phase signal of the

$$\text{term} \left[ 1 + \sum_{m \neq m_k} \left( \frac{\hat{\sigma}_k(T_m)}{\hat{\sigma}_k(T_{m,k})} \cdot e^{j\pi f_R(T_m^2 - T_{m_k}^2)} \cdot e^{j(\omega_m - \omega_{m_k}) \cdot t_s} \right) \right].$$

The amplitude of $d_{m_p}(t_s)$ is calculated by using the known antenna pattern function as

$$A_{m_p} = A(t_s - T_{m_p}) \cdot \tau_p \cdot \hat{\sigma}(T_{m_p}) \quad ; \quad |t_s - T_{m_p}| < \frac{T_L}{2}.$$

$$(2.13)$$

Finally the azimuth signal $\hat{r}_{m_p}(t_s)$ of the point target is obtained by carrying out the inverse deramping operation.

**Determination of the phase error function**

In the second step, the phase error function $\phi_e(t_s)$ is determined using the estimated azimuth point target signals $\hat{r}_{k,m_p}(t_s)$, k = 1, .., K. Therefore, first a local phase error function $\phi_{k,e}(t_s)$ is calculated

$$\phi_{k,e}(t_s) = \phi_{\hat{r}_{k,m_p}}(t_s) - \phi_{k,nom}(t_s),$$

$$(2.14)$$

where $\phi_{k,nom}(t_s)$ is the phase signal of a nominal azimuth chirp situated at the position $T_{m,p}$. The local phase error functions $\phi_{k,e}(t_s)$, k = 1, .., K, are only valid for the section of the associated reflector. The entire phase error function $\phi_e(t_s)$ is then constructed from the local phase error functions using a weighted superposition technique. Due to different coordinate errors of the selected reflectors the gradients of the local phase error functions feature an amplitude offset. In order to avoid an impact by coordinate errors not the error gradients are superpositioned but their derivatives $q_k(t_s)$, k = 1, .., K, weighted by the quality criterion $G_k(t_s)$

$$q(t_s) = \frac{\sum\limits_{k=1}^{K} G_k(t_s) \cdot q_k(t_s)}{\sum\limits_{k=1}^{K} G_k(t_s)}, \tag{2.15}$$

with

$$G_k(t_s) = G_{u,k} \cdot A(t_s - T_k) \quad ; \quad k = 1,..,K \tag{2.16}$$

The gradient $Q(t_s)$ of the phase error function is then determined as

$$Q(t_s) = \int\limits_{0}^{T_s} q(t_s)\ dt_s + Q_0. \tag{2.17}$$

The initial value $Q_0$ in Eq. 2.15 may be taken from the precedent strip. Finally, the phase error function $\phi_e(t_s)$ is obtained from $Q(t_s)$ by means of integration.

**Experimental Results**

The developed algorithm has been applied to simulated synthetic and to real raw data. Synthetic data is obtained by means of simulating a flight using real motion parameters and reflectors with different backscattering functions. The algorithm is assessed subjectively by comparing the achieved image quality with the results of the Phase-Gradient Algorithm. For the objective evaluation two quality criteria are used. The first criterion evaluates the sharpness of the SAR image. Therefor, several image sections are evaluated. The quality criterion for each section is given by the maximum value within the normalized section (energy content = 1).
The second quality criterion is defined as the standard deviation of coordinate errors of objects in the SAR image and can be applied only on simulated data, since the requested real positions of the examined objects are unknown in case of real data. Beside the improvement of target representation in SAR images, the background appears finer when using the developed focussing algorithm. The image quality - especially in case of high frequency motion errors of the SAR antenna - is improved significantly. Compared to the Phase-Gradient Algorithm the quality criterion for evaluating the sharpness of SAR images is improved by 15%. The standard deviation of coordinate errors of objects in the SAR image is reduced from 94 to 3.8 pel.

**Conclusion**

Compared to the Phase-Gradient Algorithm the developed estimator for the phase error function provides a more accurate estimate by interpreting a reflector as a sequence of several neighbouring point targets instead of one single target. Consequently, the backscattering coefficients of the neighbouring point targets have to be determined by an additional estimator. Furthermore, a more accurate weighted super position technique, which avoids the impact by coordinate errors of the selected reflectors, is used for the construction of the entire phase error function from several functions.

By selecting reflectors with symmetrically arranged point targets the estimator error can be reduced and a more accurate phase error function may be achieved in a future development.

## Claims

1. A method for autofocussing of SAR raw data using the range Doppler algorithm, wherein the method is embedded in a range Doppler processing of a side looking SAR in strip map mode,
the method comprising range compression, motion compensation and range migration correction in order to establish the signals of azimuth lines for estimating the azimuth signals of spatially distributed point targets
**characterised in that** the azimuth signal of a point target is estimated from the azimuth signal of a reflector consisting of several neighbouring point targets, in order to calculate first the local phase error function of the point target and then the entire phase error function used to correct the phase of signals of the azimuth lines before azimuth compression.

2. A method according to claim 1, wherein the estimation of the azimuth signals of point targets is realized by detecting and selecting of reflectors, extracting the corresponding azimuth signals of the reflectors and estimating the azimuth signal of a point target for each reflector assuming that a reflector consists of several point targets.

3. A method according to claim 2, wherein the selection of the reflectors is based on a ranking criterion.

4. A method according to claim 1, wherein the entire phase error function is composed from the local phase error functions.

## Patentansprüche

1. Verfahren zum Autofokussieren von SAR-Rohdaten unter Verwendung des Range-Doppler-Algorithmus, wobei das Verfahren in eine Range-Doppler-Verarbeitung eines Seitensicht-SAR in Strip-Map-Betriebsart eingebettet ist,
wobei das Verfahren Range-Komprimierung, Bewegungskompensation und Range-Migrationskorrektur umfasst, um die Signale von Azimutlinien zum Abschätzen der Azimutsignale von räumlich verteilten Zielen aufzubauen,
**dadurch gekennzeichnet, dass** das Azimutsignal eines Punktziels aus dem Azimutsignal eines Reflektors, der aus mehreren benachbarten Punktzielen besteht, geschätzt wird, um zuerst die lokale Phasenfehlerfunktion des Punktziels und dann die gesamte Phasenfehlerfunktion, die verwendet wird, um die Phase von Signalen der Azimutlinien vor der Azimutkomprimierung zu korrigieren, zu berechnen.

2. Verfahren nach Anspruch 1, wobei das Schätzen der Azimutsignale von Punktzielen durch Detektieren und Auswählen von Reflektoren, Abrufen der entsprechenden Azimutsignale der Reflektoren und Schätzen des Azimutsignals eines Punktziels für jeden Reflektor unter der Annahme, dass ein Reflektor aus mehreren Punktzielen besteht, realisiert wird.

3. Verfahren nach Anspruch 2, wobei die Auswahl der Reflektoren auf einem Rangordnungskriterium basiert.

4. Verfahren nach Anspruch 1, wobei die gesamte Phasenfehlerfunktion aus den lokalen Phasenfehlerfunktionen zusammengesetzt wird.

## Revendications

1. Procédé de focalisation automatique de données brutes SAR à l'aide de l'algorithme de portée Doppler, lequel procédé est intégré à un traitement de portée Doppler d'un SAR à visée latérale en mode Stripmap,
le procédé comprenant une compression de portée, une compensation de mouvement et une correction de migration de portée aux fins d'établir les signaux de lignes azimutales permettant d'estimer les signaux d'azimut de cibles ponctuelles réparties dans l'espace,
le procédé étant **caractérisé en ce que** le signal d'azimut d'une cible ponctuelle est estimé à partir du signal d'azimut d'un réflecteur constitué par plusieurs cibles ponctuelles voisines, dans le but de calculer tout d'abord la fonction d'erreur de phase locale de la cible ponctuelle puis la fonction d'erreur de phase globale utilisée pour corriger la phase de signaux des lignes azimutales préalablement à une compression en azimut.

**2.** Procédé selon la revendication 1, dans lequel l'estimation des signaux d'azimut de cibles ponctuelles s'effectue par détection et sélection de réflecteurs, extraction des signaux d'azimut correspondants des réflecteurs et estimation du signal d'azimut d'une cible ponctuelle pour chaque réflecteur dans l'hypothèse où un réflecteur est constitué par plusieurs cibles ponctuelles.

**3.** Procédé selon la revendication 2, dans lequel la sélection des réflecteurs est basée sur un critère de classement.

**4.** Procédé selon la revendication 1, dans lequel la fonction d'erreur de phase globale est composée des fonctions d'erreur de phase locales.

raw data

range compression

motion compensation
&
range migration correction

Estimation of the phase-error
function

phase correction

$\Phi_e(t_s)$

azimuth compression using
a nominal
azimuth reference function

SAR image

**Fig. 1**

range compressed data

| |
| --- |
| Detection & selection of reflectors |

| |
| --- |
| Estimation of azimuth signals of corresponding point targets |

| |
| --- |
| Determination of the phase–error function |

$\phi_e(t_s)$

**Fig. 2**

# EP 2 284 569 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAYES, M.P. ; CALLOW, H.J. ; GOUGH, P.T.** Strip-map phase gradient autofocus. *Proceedings Image and Vision Computing New Zealand,* November 2002, 71-76
- **QINYAN TAN et al.** An Auto -Focus Algorithm for Missile-Borne SAR. *Microwave Conference,* 10 September 2008, ISBN 978-1-4244-3821-1, 253-257

- **XIN ZHANG et al.** An integrated real time PGA method for strip map airborne SAR. *6th European Conference on Synthetic Aperture Radar,* 16 May 2006, IS-BN 978-3-8007-2960-9, 3PP
- **VINCENT, L. ; SOILLE, P.** Watersheds in Digital Spaces: An Efficient Algorithm Based on Immersion Simulations. *IEEE Transactions on Pattern Analysis and Machine Intelligence,* 1991, vol. 13 (6), 583-598